# EUROPÄISCHE PATENTSCHRIFT

(11) **EP 3 256 416 B1**
(45) Veröffentlichungstag und Bekanntmachung des Hinweises auf die Patenterteilung: **12.12.2018**
(21) Anmeldenummer: 16705914.6
(22) Anmeldetag: 10.02.2016
(51) Int. Cl.: B66D 1/48, B66D 1/54

(54) **SEILZUG**
CABLE WINCH
TREUIL À CÂBLE

(30) Priorität: 13.02.2015 DE 102015102140
(43) Veröffentlichungstag der Anmeldung: 20.12.2017
(73) Patentinhaber: Konecranes Global Corporation, 05830 Hyvinkää (FI)
(72) Erfinder: MOLL, Oliver, 42659 Solingen (DE); PERSICO, Giuliano, 58300 Wetter (DE); FREITAG, Holger, 44894 Bochum (DE)
(74) Vertreter: Moser Götze & Partner Patentanwälte mbB
(86) Internationale Anmeldenummer: PCT/EP2016/052827
(87) Internationale Veröffentlichungsnummer: WO 2016/128464

(56) Entgegenhaltungen:
- EP-A1- 2 179 959
- US-A1- 2005 072 965

## Beschreibung

Die Erfindung betrifft einen Seilzug gemäß der Präambel von Anspruch 1.

Aus der deutschen Offenlegungsschrift DE 34 24 590 A1 ist bereits ein Kettenzug mit einem elektrischen Antriebsmotor bekannt. Der Antriebsmotor ist über ein Getriebe mit einem Kettenrad zum Antrieb einer Kette verbunden. Das Getriebe weist in üblicher Weise eine Getriebeeingangswelle auf, an deren dem Antriebsmotor gegenüber liegenden Ende eine Scheibe drehfest verbunden ist. Die Scheibe ist Bestandteil einer Sensoranordnung zur Drehzahlbestimmung der Getriebeeingangswelle, die einen Sensor beinhaltet, der nach dem Halleffekt arbeitet. Hierfür sind entlang des Umfangs der Scheibe in gleichen Abständen zueinander Magnete eingebettet, die von dem Hallsensor detektiert werden, wenn diese sich an dem Hallsensor durch Drehung der Getriebeeingangswelle vorbei bewegen.

Des Weiteren beschreibt die europäische Patentanmeldung EP 0 476 459 A2 eine Sicherheitsvorrichtung für Krane, bei der jeweils ein Drehzahlgeber und jeweils ein Drehwinkelgeber einem elektrischen Antriebsmotor und zusätzlich auch einer Seiltrommel zugeordnet sind. Die Drehzahlgeber sind als Inkrementalgeber und die Drehwinkelgeber als Winkelcodierer ausgebildet. Im Bereich eines Getriebes zwischen dem Antriebsmotor und der Seiltrommel sind weder Drehzahlgeber noch Drehwinkelgeber vorgesehen.

Ferner ist aus der deutschen Patentanmeldung DE 103 39 440 A1 ein Verfahren zu Überwachung eines Kettenzugs bekannt, das ein Signal eines Drehzahlsensors auswertet. Der Drehzahlsensor ist an einem Ende einer Eingangswelle eines Getriebes angeordnet, das einem elektrischen Antriebsmotor gegenüber liegt. Der Drehzahlsensor ist als Lichtschranke ausgebildet, die gabelförmig einen äußeren Rand einer Fächerscheibe umgreift. Die Fächerscheibe ist drehfest mit der Eingangswelle des Getriebes verbunden und an ihrem äußeren Randbereich mit im Wesentlichen rechteckigen Zähnen versehen, die gleichmäßig entlang des Umfangs der Fächerscheibe verteilt sind und sich mit im Wesentlichen rechteckigen Aussparungen abwechseln. Als Signal werden von dem Drehzahlsensor die Unterbrechungen des Lichtstrahl durch die sich vorbei bewegenden Zähne der Fächerscheibe ausgewertet.

Die Anordnung eines Drehgebers zwischen einem Antriebsmotor und einem Getriebe ist in Bezug auf den Lenkantrieb eines Fahrzeugs aus der JP 2010 - 200 543 A und in Bezug auf den Stellantrieb von Fensterhebern und Spiegelverstellern von Fahrzeugen aus der DE 197 49 009 A1 bekannt. Auch ist eine entsprechende Anordnung aus der JP 2001 - 103 709 A bekannt.
Ein Seilzug mit den Merkmalen der Präambel von Anspruch 1 ist bereits aus der US 2005/0072965 A1 bekannt. Aus der EP 2 179 959 A1 ist ein weiterer Seilzug mit einem Drehgeber bekannt.
Der Erfindung liegt die Aufgabe zugrunde, einen Seilzug mit einem elektrischen Antriebsmotor, einem Getriebe und einem Drehgeber zu schaffen, in der der Drehgeber vorteilhaft angeordnet ist.

Diese Aufgabe wird bei einem Seilzug mit einem elektrischen Antriebsmotor, einem Getriebe und einem Drehgeber mit den Merkmalen des Anspruchs 1 gelöst. Vorteilhafte Ausgestaltungen der Erfindung sind in den Ansprüchen 2 bis 9 angegeben.

Erfindungsgemäß wird bei einem Seilzug mit einem elektrischen Antriebsmotor, einem Getriebe und einem Drehgeber, wobei der elektrische Antriebsmotor an das Getriebe angekuppelt ist und der Drehgeber in der Weise dem elektrischen Antriebsmotor und/oder dem Getriebe zugeordnet ist, dass der Drehgeber ein Signal zur Bestimmung der Drehzahl des Antriebsmotors und/oder des Getriebes zur Verfügung stellt, wobei der Drehgeber zwischen dem elektrischen Antriebsmotor und dem Getriebe angeordnet ist, der Drehgeber eine Scheibe und einen als Hallsensor ausgebildeten Sensor umfasst, die Scheibe konzentrisch und drehfest an einer Motorwelle des Antriebsmotors oder einer Eingangswelle des Getriebes angeordnet ist und der Sensor die Scheibe abtastet und an einer Aufnahme und/oder dem Getriebe befestigt ist, eine vorteilhafte Anordnung des Drehgebers dadurch erreicht, dass die Scheibe flach und ringförmig ist, in einem Randbereich eine Vielzahl von Fenstern angeordnet sind, die in Umfangsrichtung aufeinander folgend voneinander gleichmäßig beabstandet sind, der Sensor die Scheibe im Bereich der Fenster abtastet, und dass die Scheibe und der Sensor derart zueinander angeordnet sind, dass ein axialer Abgriff der Signale möglich ist. Hierdurch wird ein kleine Baugröße in Radialrichtung gesehen ermöglicht.

Vorteilhafter Weise ist vorgesehen, dass an dem Getriebe im Bereich der Eingangswelle des Getriebes die Aufnahme angeordnet ist, der elektrische Antriebsmotor an der Aufnahme befestigt ist und innerhalb der Aufnahme ein Kupplungsraum vorhanden ist, in dem der Drehgeber zumindest mit seinem funktionellen Anteil angeordnet ist. Der Drehgeber kann somit platzsparend in einem vorhandenen Kupplungsraum untergebracht werden. Unter dem funktionellen Anteil des Drehgebers sind die Scheibe und der angrenzende Sensor zu verstehen. Ein Teil des Gehäuses des Sensors kann in einer Wand des Gehäuses oder der Aufnahme eintauchen.

Auch wird der Kupplungsraum dazu verwendet, die Motorwelle des elektrischen Antriebsmotors an die Eingangswelle des Getriebes über eine Wellenkupplung anzuschließen.

Hierbei ist vorteilhafter Weise der Kupplungsraum radial von der Aufnahme und axial von dem Getriebe und dem elektrischen Antriebsmotor begrenzt.

In besonderer konstruktiver Ausgestaltung ist die Aufnahme ringförmig und konzentrisch zur Eingangswelle des Getriebes ausgerichtet.

Besonders vorteilhaft ist der Kupplungsraum geschlossen. Der Drehgeber kann somit geschützt vor Umwelteinflüssen untergebracht werden.

Eine Anordnung des Drehgebers an der Eingangswelle erleichtert einen Wechsel oder Anbau des elektrischen Antriebsmotors.

Eine besonders einfache Montage und Wartung wird dadurch möglich, dass ein Sensor des Drehgebers ausgehend von einer Außenseite einer Wand eines Gehäuses des Getriebes durch eine in der Wand vorgesehene Bohrung eingesteckt ist und an der Außenseite anliegend in den Kupplungsraum hinein ragt.

In konstruktiv einfacher Weise ist zudem vorgesehen, dass der Drehgeber, insbesondere dessen Sensor, außerhalb eines an den Kupplungsraum angrenzenden Innenraums eines Gehäuses des Getriebes angeordnet ist. Dadurch ist der Sensor besonders einfach für Wartungs- und Montagezwecke von außerhalb des Gehäuses des Getriebes zugänglich, ohne dass das Gehäuse beziehungsweise dessen Innenraum hierfür geöffnet werden müssen.

Nachfolgend wird ein Ausführungsbeispiel der Erfindung an Hand eines in der Zeichnung dargestellten Ausführungsbeispiels näher erläutert. Es zeigen:
Figur 1 eine schematische Ansicht der wesentlichen Komponenten eines Seilzugs 1 und
Figur 2 eine vergrößerte Schnittansicht aus dem Bereich eines mit einem Getriebe 3 verbundenem elektrischen Antriebsmotors 2.

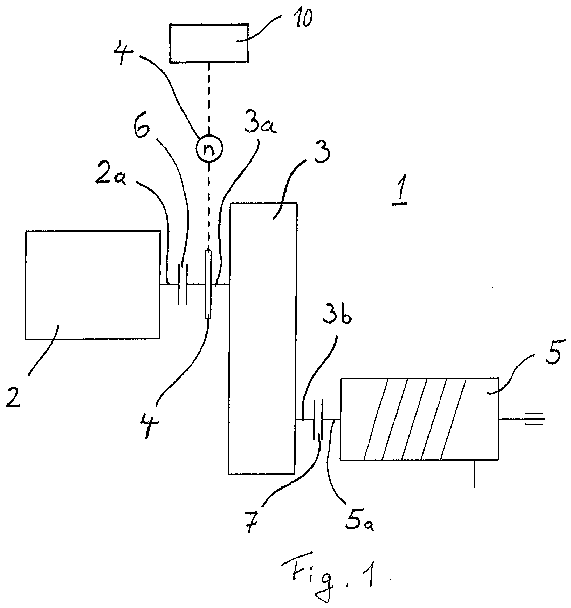

Die Figur 1 zeigt in schematischer Ansicht die wesentlichen Komponenten eines Seilzugs 1 zum Heben und Senken von Lasten, der einen elektrischen Antriebsmotor 2, ein Getriebe 3, einen Drehgeber 4 und eine Seiltrommel 5 umfasst. Der elektrische Antriebsmotor 2 weist in üblicher Weise eine Motorwelle 2a auf, die auf der Abtriebsseite des Antriebsmotors 2 heraus ragt. Die Motorwelle 2a ist drehfest über eine Wellenkupplung 6 mit einer Eingangswelle 3a des Getriebes 3 verbunden. Der Eingangswelle 3a ist der Drehgeber 4 zugeordnet, über den die Drehzahl der Eingangswelle 3a bestimmt werden kann. Ausgangsseitig ist das Getriebe 3 über eine Ausgangswelle 3b und eine weitere Kupplung 7 mit einer Trommelwelle 5a der Seiltrommel 5 verbunden.

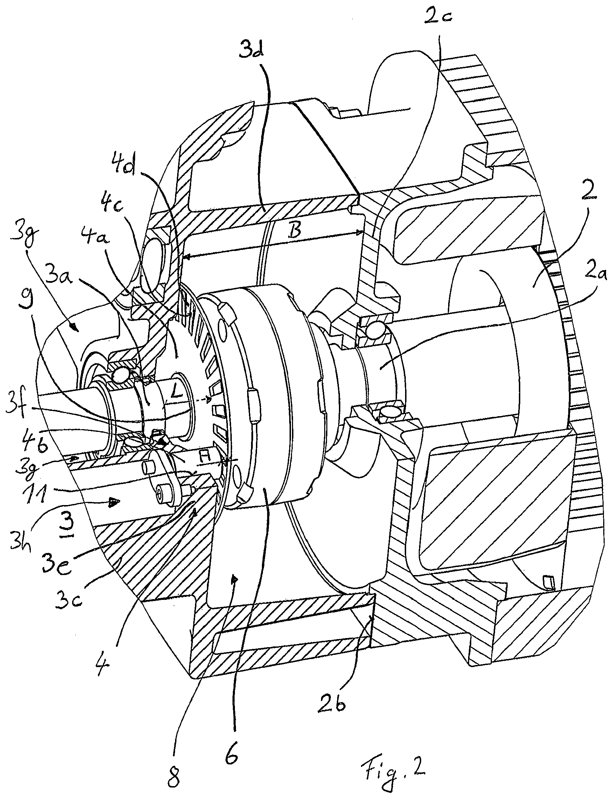

In der Figur 2 ist eine vergrößerte Schnittansicht eines abtriebsseitigen Teils des elektrischen Antriebsmotors 2 und eines eingangsseitigen Teils des Getriebes 3 und eines Innenraums 3g von dessen Gehäuse 3c dargestellt. Der elektrische Antriebsmotors 2 ist als handelsüblicher Elektromotor mit einem Anschlussflansch 2b mit nicht dargestellten Durchgangsbohrungen für eine Verschraubung mit dem Getriebe 3 ausgebildet, der vorzugsweise genormt ist. Für den Anbau des Antriebsmotors 2 an einem Gehäuse 3c des Getriebes 3 ist an dem Gehäuse 3c eine zylindrische und hülsenförmige Aufnahme 3d ausgeformt, die konzentrisch zur Eingangswelle 3a des Getriebes 3 ausgerichtet ist und sich parallel zu der Eingangswelle 3a nach außen erstreckt. An einem von dem Gehäuse 3c des Getriebes 3 abgewandten Ende der Aufnahme 3d kommt im montierten Zustand von Antriebsmotor 2 und Getriebe 3 der Anschlussflansch 2b des Antriebsmotors 2 zur Anlage und wird mit der Aufnahme 3d verschraubt. Hierdurch entsteht ein geschlossener Kupplungsraum 8, der radial von der Aufnahme 3d und axial von einer Wand 3e des Gehäuses 3c und einem motorwellenseitigen Schild 2c des Antriebsmotors 2 begrenzt sind. Hierbei sind die Wand 3e und das Schild 2c zur Bildung des Kupplungsraums 8 mit einer Breite B entsprechend voneinander beabstandet. Die Breite B beträgt in etwa 50 bis 140 mm. Innerhalb des Kupplungsraums 8 werden die Motorwelle 2a und die axial hierzu fluchtende Eingangswelle 3a über die Wellenkupplung 6 drehfest miteinander gekuppelt. Die Bauform der Wellenkupplung 6, insbesondere deren axiale Länge, sowie die Breite B des Kupplungsraums 8 sind so gewählt, dass die Eingangswelle 3a etwa um die Länge L aus der Wand 3e des Gehäuses 3c und damit aus dem Innenraum 3g des Gehäuses 3c heraus ragt, bis diese in die Wellenkupplung 6 eintaucht. Die Länge L beträgt in etwa 10 bis 60 mm. Hierdurch ist ausreichend Raum innerhalb des Kupplungsraums 8 vorhanden, um den Drehgeber 4 aufzunehmen, der somit außerhalb des an den Kupplungsraum 8 angrenzenden Innenraums 3g und damit getrennt von dem Innenraum 3g angeordnet ist.

Der Drehgeber 4 kann in allen geläufigen Ausführungsformen ausgestaltet sein. Bevorzugt und in der Figur 2 dargestellt ist eine Ausgestaltung des Drehgebers 4 mit einer runden Scheibe 4a, die von einem Sensor 4b berührungslos abgetastet wird, der nach dem Halleffekt arbeitet. Die Scheibe 4a weist eine zentrale Öffnung auf, um diese auf die Eingangswelle 3a konzentrisch und spielarm aufzuschieben und mit einem Sicherungsring 9 auf der dem Getriebe 3 zugewandten Seite zu sichern. In der Bohrung der Scheibe 4a ist eine nach innen hervor stehende Nase vorgesehen, die in eine Längsnut in der Eingangswelle 3a eingreift. Auf der gegenüber liegenden Seite liegt die Scheibe 4a beispielsweise über eine Hülse an der Wellenkupplung 6 an. Die Scheibe 4a ist ein kreisrundes, ringförmiges und gestanztes Blechteil, das im äußeren Randbereich mit geringem Abstand zum Rand eine Vielzahl von trapezförmigen und im Umfangsrichtung gesehen gleich voneinander beabstandeten Fenstern 4c aufweist. Hierbei sind die Fenster 4c über den gesamten Umfang der Scheibe 4a gleichmäßig verteilt angeordnet und jeweils von Stegen 4d aus dem Material der Scheibe 4a zwischen Fenstern 4c untereinander getrennt. Die Fenster 4c sind ebenfalls ausgestanzt und sind somit offene Aussparungen in der Scheibe 4a. Durch eine drehende Eingangswelle 3a werden die Fenster 4c in Umfangsrichtung der Scheibe 4a an dem Sensor 4b vorbei geführt und der Sensor 4b erkennt den Wechsel zwischen Fenster 4c und Steg 4d, der als Zählimpuls ausgewertet wird. Über diesen Zählimpuls wird dann in einer Steuerung 10 (siehe Figur 1), die Drehzahl der Eingangswelle 3a beispielsweise in Umdrehungen pro Minute berechnet. Vorzugsweise sind dreißig im Umfangsrichtung aufeinander folgenden Fenster 4c vorgesehen und die Scheibe weist einen Durchmesser von 140 mm auf. Es sind auch andere Anzahlen von Fenster anstelle von dreißig und andere Durchmesser denkbar.

Hierbei ist der Sensor 4b als sogenannter vorgespannter Hallsensor ausgebildet, der eine feste Kombination von einem Hallsensor und einem Magnet in dem Sensor 4b ist. Die sich an diesem Sensor 4b vorbei bewegenden Fenster 4c und Stege 4d erzeugen eine unterschiedliche Ablenkung der Feldlinien des Magneten, die von dem Hallsensor dann als eine Modulation der Flussdichte im Sinne eines Zählimpulses erkannt wird.

Des Weiteren ist der Figur 2 näheres zum Einbauort des Sensors 4b zu entnehmen. Der Kupplungsraum 8 ist wie in Figur 2 dargestellt getriebeseitig von innerhalb des Gehäuses 3c über den Innenraum 3g und von außerhalb des Gehäuses 3c über eine Bohrung 11 zugänglich. Der Sensor 4b ist durch die Bohrung 11 von außen, das heißt ausgehend von einer Außenseite 3h des Gehäuses 3c, durch die Wand 3e des Gehäuses 3c hindurch so eingesteckt, dass der Sensor 4b mit einem Teil seines Gehäuses in die Wand 3e eintaucht. Hierbei kommt der am Gehäuse 3c befestigte Sensor 4b beziehungsweise dessen Halteteil an der Außenseite 3h zur Anlage, wodurch er für Wartungs- und Montagezwecke von außerhalb des Gehäuses 3c des Getriebes 3 einfach zugänglich ist, ohne dass das Gehäuse 3c beziehungsweise dessen Innenraum 3g hierfür geöffnet werden müssen. Der Sensor 4b ragt ausgehend von der Außenseite 3h durch die Bohrung 11 hindurch und aus der Bohrung 11 nach innen in den Kupplungsraum 8 hinein und endet mit einem geringem Abstand A vor der abzutastenden Scheibe 4a. Der Abstand A beträgt 0,2 mm bis 5 mm. Der Sensor 4b steht aufgrund seiner von dem Innenraum 3g getrennten Lagerung nicht in Kontakt mit dem Innenraum 3g des Getriebes 3, da der Sensor 4b in einem Teil 3f der Wand 3e angeordnet ist, die das Gehäuse 3c des Getriebes 3 verlängert, um einerseits einen Teil der Aufnahme 3d abzustützen und andererseits den Kupplungsraum 8 zu begrenzen. Entsprechender Weise ist die Aufnahme 3d und somit der Kupplungsraum 8 in Richtung der Eingangswelle 3a gesehen seitlich versetzt ausgerichtet, so dass in dieser Richtung gesehen nur ein Teil der Aufnahme 3d das Gehäuse 3c des Getriebes 3 überdeckt. Ein an den überdeckten Teil seitlich angrenzender Teil der Aufnahme 3d wird getriebeseitig von dem Teil 3f der Wand 3e begrenzt, in dessen Bohrung 11 wie oben beschrieben der Sensor 4b aufgenommen ist.

In einem nicht beanspruchten Seilzug ist es denkbar, den Drehgeber 4 mit einem Sensor 4b als Lichtschranke auszubilden, die gabelförmig einen äußeren Rand einer Fächerscheibe umgreift. Dann ist die Fächerscheibe drehfest mit der Eingangswelle 3a des Getriebes 3 verbunden und an ihrem äußeren Randbereich mit im Wesentlichen rechteckigen Zähnen versehen, die gleichmäßig entlang des Umfangs der Fächerscheibe verteilt sind und sich mit im Wesentlichen rechteckigen Aussparungen abwechseln. Als Signal werden von dem Drehzahlsensor die Unterbrechungen des Lichtstrahl durch die sich vorbei bewegenden Zähne der Fächerscheibe ausgewertet. Ein direktes berührungsloses Abgreifen der Drehbewegung der entsprechend bearbeiteten, d.h. magnetisierten Eingangswelle 3a wäre auch denkbar.

### Bezugszeichenliste

1 Seilzug
2 elektrischer Antriebsmotor
2a Motorwelle
2b Anschlussflansch
2c Schild
3 Getriebe
3a Eingangswelle
3b Ausgangswelle
3c Gehäuse
3d Aufnahme
3e Wand
3f Teil der Wand 3e
3g Innenraum
3h Außenseite
4 Drehgeber
4a Scheibe
4b Sensor
4c Fenster
4d Steg
5 Seiltrommel
5a Trommelwelle
6 Wellenkupplung
7 weitere Kupplung
8 Kupplungsraum
9 Sicherungsring
10 Steuerung
11 Bohrung

A Abstand
B Breite
L Länge

## Patentansprüche

1. Seilzug (1) mit einem elektrischen Antriebsmotor (2), einem Getriebe (3) und einem Drehgeber (4), wobei der elektrische Antriebsmotor (2) an das Getriebe (3) angekuppelt ist und der Drehgeber (4) in der Weise dem elektrischen Antriebsmotor (2) und/oder dem Getriebe (3) zugeordnet ist, dass der Drehgeber (4) ein Signal zur Bestimmung der Drehzahl des Antriebsmotors (2) und/oder des Getriebes (3) zur Verfügung stellt, wobei der Drehgeber (4) zwischen dem elektrischen Antriebsmotor (2) und dem Getriebe (3) angeordnet ist, der Drehgeber (4) eine Scheibe (4a) und einen als Hallsensor ausgebildeten Sensor (4b) umfasst, die Scheibe (4a) konzentrisch und drehfest an einer Motorwelle (2a) des Antriebsmotors (2) oder einer Eingangswelle (3a) des Getriebes (3) angeordnet ist und der Sensor (4b) die Scheibe (4a) abtastet und an einer Aufnahme (3d) und/oder dem Getriebe (3) befestigt ist, **dadurch gekennzeichnet, dass** die Scheibe (4a) flach und ringförmig ist, in einem Randbereich eine Vielzahl von Fenstern (4c) angeordnet sind, die in Umfangsrichtung aufeinander folgend voneinander gleichmäßig beabstandet sind, der Sensor (4b) die Scheibe (4a) im Bereich der Fenster (4c) abtastet, und dass die Scheibe (4a) und der Sensor (4b) derart zueinander angeordnet sind, dass ein axialer Abgriff der Signale möglich ist.

2. Seilzug (1) gemäß Anspruch 1, **dadurch gekennzeichnet, dass** an dem Getriebe (3) im Bereich der Eingangswelle (3a) des Getriebes (3) die Aufnahme (3d) angeordnet ist, der elektrische Antriebsmotor (2) an der Aufnahme (3d) befestigt ist und innerhalb der Aufnahme (3d) ein Kupplungsraum (8) vorhanden ist, in dem der Drehgeber (4) zumindest mit seinem funktionellen Anteil angeordnet ist.

3. Seilzug (1) gemäß Anspruch 2, **dadurch gekennzeichnet, dass** in dem Kupplungsraum (8) die Motorwelle (2a) des elektrischen Antriebsmotors (2) an die Eingangswelle (3a) des Getriebes (3) über eine Wellenkupplung (6) angeschlossen ist.

4. Seilzug (1) gemäß Anspruch 2 oder 3, **dadurch gekennzeichnet, dass** der Kupplungsraum (8) radial von der Aufnahme (3d) und axial von dem Getriebe (3) und dem elektrischen Antriebsmotor (2) begrenzt ist.

5. Seilzug (1) gemäß einem der Ansprüche 2 bis 4, **dadurch gekennzeichnet, dass** die Aufnahme (3d) ringförmig und konzentrisch zur Eingangswelle (3a) des Getriebes (3) ausgerichtet ist.

6. Seilzug (1) gemäß einem der Ansprüche 2 bis 5, **dadurch gekennzeichnet, dass** der Kupplungsraum (8) geschlossen ist.

7. Seilzug (1) gemäß einem der Ansprüche 1 bis 6, **dadurch gekennzeichnet, dass** der Drehgeber (4) an der Eingangswelle (3a) angeordnet ist.

8. Seilzug (1) nach einem der Ansprüche 2 bis 7, **dadurch gekennzeichnet, dass** ein Sensor (4b) des Drehgebers (4) ausgehend von einer Außenseite (3h) einer Wand (3e) eines Gehäuses (3c) des Getriebes (3) durch eine in der Wand (3e) vorgesehene Bohrung (11) eingesteckt ist und an der Außenseite (3h) anliegend in den Kupplungsraum (8) hinein ragt.

9. Seilzug (1) nach einem der Ansprüche 2 bis 8, **dadurch gekennzeichnet, dass** der Drehgeber (4), insbesondere dessen Sensor (4b), außerhalb eines an den Kupplungsraum (8) angrenzenden Innenraums (3g) eines Gehäuses (3c) des Getriebes (3) angeordnet ist.

## Claims

1. Cable winch (1) comprising an electric drive motor (2), a transmission (3) and a rotary encoder (4), wherein the electric drive motor (2) is coupled to the transmission (3) and the rotary encoder (4) is allocated to the electric drive motor (2) and/or the transmission (3) in such a way that the rotary encoder (4) provides a signal for determining the rotational speed of the drive motor (2) and/or of the transmission (3), wherein the rotary encoder (4) is arranged between the electric drive motor (2) and the transmission (3), the rotary encoder (4) comprises a disk (4a) and a sensor (4b) which is designed as a Hall sensor, the disk (4a) is arranged on a motor shaft (2a) of the drive motor (2) or an input shaft (3a) of the transmission (3) concentrically and for conjoint rotation therewith and the sensor (4b) scans the disk (4a) and is fastened to a receiver (3d) and/or the transmission (3), **characterised in that** the disk (4a) is flat and annular, a multiplicity of windows (4c) are arranged in an edge region, which windows, being consecutive in the circumferential direction, are uniformly spaced apart from one another, the sensor (4b) scans the disk (4a) in the region of the windows (4c), and **in that** the disk (4a) and the sensor (4b) are arranged with respect to one another such that it is possible to axially tap the signals.

2. Cable winch (1) as claimed in claim 1, **characterised in that** the receiver (3d) is arranged on the transmission (3) in the region of the input shaft (3a) of the transmission (3), the electric drive motor (2) is fastened to the receiver (3d), and provided within the receiver (3d) is a coupling space (8) in which at least the functional portion of the rotary encoder (4) is arranged.

3. Cable winch (1) as claimed in claim 2, **characterised in that** in the coupling space (8) the motor shaft (2a) of the electric drive motor (2) is connected to the input shaft (3a) of the transmission (3) via a shaft coupling (6).

4. Cable winch (1) as claimed in claim 2 or 3, **characterised in that** the coupling space (8) is defined radially by the receiver (3d) and axially by the transmission (3) and the electric drive motor (2).

5. Cable winch (1) as claimed in any one of claims 2 to 4, **characterised in that** the receiver (3d) is annular and is oriented concentrically with respect to the input shaft (3a) of the transmission (3).

6. Cable winch (1) as claimed in any one of claims 2 to 5, **characterised in that** the coupling space (8) is closed.

7. Cable winch (1) as claimed in any one of claims 1 to 6, **characterised in that** the rotary encoder (4) is arranged on the input shaft (3a).

8. Cable winch (1) as claimed in any one of claims 2 to 7, **characterised in that** a sensor (4b) of the rotary encoder (4) is inserted, starting from an outer side (3h) of a wall (3e) of a housing (3c) of the transmission (3), through a bore (11) provided in the wall (3e) and protrudes, lying against the outer side (3h), into the coupling space (8).

9. Cable winch (1) as claimed in any one of claims 2 to 8, **characterised in that** the rotary encoder (4), in particular its sensor (4b), is arranged outside an inner space (3g) of a housing (3c) of the transmission (3) adjoining the coupling space (8).

## Revendications

1. Palan à câble (1) comprenant un moteur électrique (2), une transmission (3) et un codeur rotatif (4), le moteur électrique (2) étant accouplé à la transmission (3) et le codeur rotatif (4) étant associé au moteur d'entraînement électrique (2) et/ou à la transmission (3) de telle manière que le codeur rotatif (4) délivre un signal destiné à déterminer la vitesse de rotation du moteur d'entraînement (2) et/ou de la transmission (3), le codeur rotatif (4) étant disposé entre le moteur d'entraînement électrique (2) et la transmission (3), le codeur rotatif (4) comprenant un disque (4a) et un capteur (4b) conçu comme un capteur à effet Hall, le disque (4a) étant disposé concentriquement et solidairement en rotation au niveau d'un arbre moteur (2a) du moteur d'entraînement (2) ou d'un arbre d'entrée (3a) de la transmission (3) et le capteur (4b) balayant le disque (4a) et étant fixé à un logement (3d) et/ou à la transmission (3), **caractérisé en ce que** le disque (4a) est plat et annulaire, une pluralité de fenêtres (4c) étant disposées dans une région de bord, lesquelles sont disposées à la suite et à distance régulière les unes des autres dans la direction circonférentielle, le capteur (4b) balaie le disque (4a) au niveau des fenêtres (4c), le disque (4a) et le capteur (4b) sont disposés l'un par rapport à l'autre de manière à pouvoir capter axialement les signaux.

2. Palan à câble (1) selon la revendication 1, **caractérisé en ce que**, au niveau de la transmission (3), le logement (3d) est disposé dans la zone de l'arbre d'entrée (3a) de la transmission (3), le moteur d'entraînement électrique (2) est fixé au niveau du logement (3d) et un espace d'accouplement (8), dans lequel le codeur rotatif (4) est disposé au moins avec sa partie fonctionnelle, est ménagé dans le logement (3d).

3. Palan à câble (1) selon la revendication 2, **caractérisé en ce que**, dans l'espace d'accouplement (8), l'arbre moteur (2a) du moteur électrique (2) est relié à l'arbre d'entrée (3a) de la transmission (3) par le biais d'un accouplement d'arbre (6).

4. Palan à câble (1) selon la revendication 2 ou 3, **caractérisé en ce que** l'espace d'accouplement (8) est limité radialement par le logement (3d) et axialement par la transmission (3) et le moteur électrique d'entraînement (2).

5. Palan à câble (1) selon l'une des revendications 2 à 4, **caractérisé en ce que** le logement (3d) est orienté annulairement et concentriquement à l'arbre d'entrée (3a) de la transmission (3).

6. Palan à câble (1) selon l'une des revendications 2 à 5, **caractérisé en ce que** l'espace d'accouplement (8) est fermé.

7. Palan à câble (1) selon l'une des revendications 1 à 6, **caractérisé en ce que** le codeur rotatif (4) est disposé au niveau de l'arbre d'entrée (3a).

8. Palan à câble (1) selon l'une des revendications 2 à 7, **caractérisé en ce qu'**un capteur (4b) du codeur rotatif (4) est inséré dans un alésage (11) ménagé dans la paroi (3e), partant d'un côté extérieur (3h) d'une paroi (3e) d'un boîtier (3c) de la transmission (3) et fait saillie dans l'espace d'accouplement (8) du côté extérieur (3h).

9. Palan à câble (1) selon l'une des revendications 2 à 8, **caractérisé en ce que** le codeur rotatif (4), notamment son capteur (4b), est disposé à l'extérieur d'un espace intérieur (3g) adjacent à l'espace d'accouplement (8) d'un boîtier (3c) de la transmission (3).
